# EUROPEAN PATENT APPLICATION

(11) **EP 4 772 079 A1**
(43) Date of publication of application: **08.07.2026**
(21) Application number: 23950654.6
(22) Date of filing: 28.08.2023
(51) Int. Cl.: A47J 31/00

(54) **BEVERAGE PRODUCTION DEVICE**

(71) Applicant: sPods Inc., Tokyo 153-0065 (JP)
(72) Inventor: NISHIMURA, Tsutomu, Kyoto-shi, Kyoto 605-0811 (JP); IMAGAWA, Takahito, Nagoya-shi, Aichi 465-0078 (JP); OGAWA, Yoji, Kobe-shi, Hyogo 658-0048 (JP); OTA, Jun, Tokyo 104-0041 (JP); ISOBE, Yoko, Tokyo 153-0065 (JP)
(74) Representative: Hasegawa, Kan
(86) International application number: PCT/JP2023/030977
(87) International publication number: WO 2025/046703

(57) **Abstract**

An embodiment has: a bottle 2 configured to contain at least a material to be extracted 10 and a liquid; and a pressure adjustment machine 3 connected to the bottle via a pipe 4 and configured to increase and reduce an air pressure inside the bottle and performs a pressurization-depressurization cycle consisting of a depressurizing step of reducing the air pressure inside the bottle to an air pressure lower than the atmospheric pressure, a depressurization holding step of holding the air pressure inside the bottle at the air pressure lower than the atmospheric pressure for a predetermined duration after the depressurizing step, a pressurizing step of increasing the air pressure inside the bottle to an air pressure higher than the atmospheric pressure after the depressurization holding step, and a pressurization holding step of holding the air pressure inside the bottle at the air pressure higher than the atmospheric pressure for a predetermined duration after the pressurizing step.

## Description

### [Technical Field]

The present invention relates to a beverage production device that can produce beverages.

### [Background Art]

Patent Literature 1 discloses an invention of a beverage production device, which is an invention granted to the present applicants. The invention disclosed by Patent Literature 1 is to brew a tea by performing a depressurization cycle consisting of a depressurizing step of controlling a vacuum pump to reduce the air pressure inside a bottle, which contains at least tea leaves, water, and ice, to a predetermined air pressure, a depressurization holding step of holding the predetermined air pressure for a predetermined duration, an opening step of opening to the atmosphere into the normal pressure from the predetermined air pressure, and a normal pressure holding step of holding the normal pressure state for a predetermined duration after the opening step.

The configuration described above makes it possible to extract more umami components in a short time while suppressing the extraction amount of bitter or astringent components of tea leaves.

### [Citation List]

### [Patent Literature]

Patent Literature 1: Japanese Patent No. 7020730

### [Summary of Invention]

### [Technical Problem]

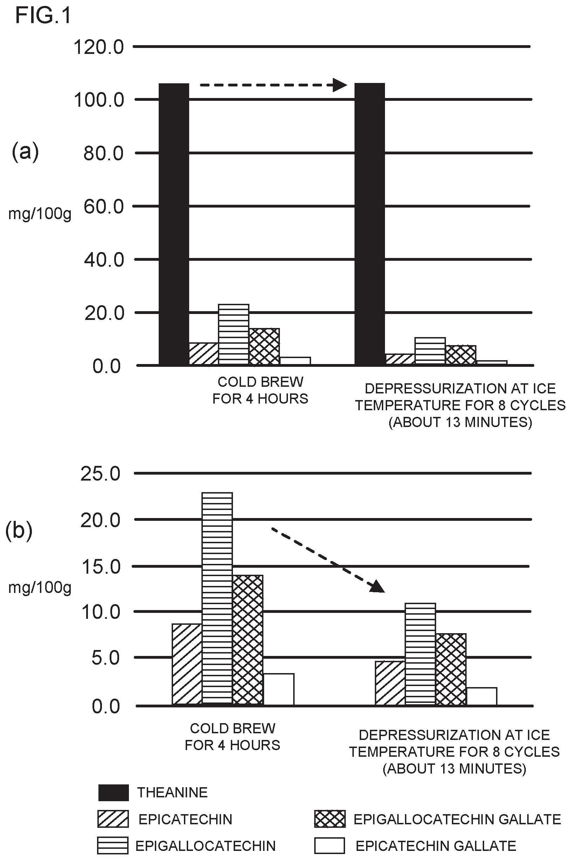

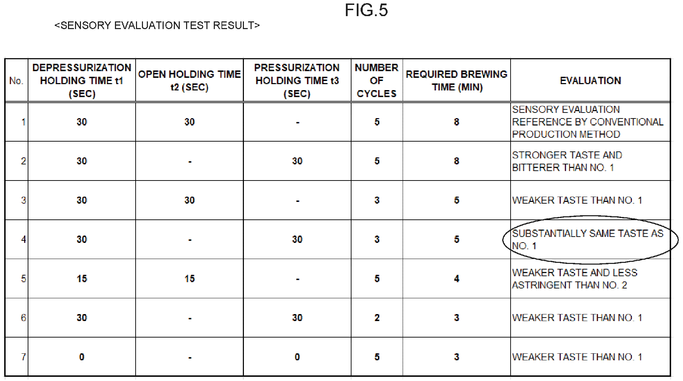

In the above brewing method disclosed in Patent Literature 1, however, as illustrated in Fig. 1 (Fig. 5 of Patent Literature 1), for example, eight cycles of the depressurization cycle are required to extract an amount of theanine corresponding to that of a conventional cold brew tea steeped for four hours, and these cycles require as much as about 13 minutes. Thus, there is a demand for a reduction in the time taken for beverage production.

Accordingly, in view of the problem described above, the present invention intends to provide a beverage production device that can effectively reduce the time taken for beverage production.

### [Solution to Problem]

(1) Provided is a beverage production device having: a bottle configured to contain at least a material to be extracted and a liquid; and a pressure adjustment machine connected to the bottle via a pipe and configured to increase and reduce an air pressure inside the bottle, in which the bottle comprises a lid configured to be connected to the pipe and seal the bottle, in which the pressure adjustment machine includes a compressor, a vacuum pump, an electromagnetic valve, a pressure sensor, and a control unit configured to control the compressor, the vacuum pump, and the electromagnetic valve based on a detection result from the pressure sensor, and in which the control unit performs a pressurization-depressurization cycle consisting of a depressurizing step of reducing the air pressure inside the bottle to an air pressure lower than the atmospheric pressure, a depressurization holding step of holding the air pressure inside the bottle at the air pressure lower than the atmospheric pressure for a predetermined duration after the depressurizing step, a pressurizing step of increasing the air pressure inside the bottle to an air pressure higher than the atmospheric pressure after the depressurization holding step, and a pressurization holding step of holding the air pressure inside the bottle at the air pressure higher than the atmospheric pressure for a predetermined duration after the pressurizing step.
(2) Provided is the beverage production device according to (1) described above, in which the material to be extracted includes at least tea leaves, the liquid is water, and the pressurization-depressurization cycle is performed with ice being contained in the bottle.
(3) Provided is the beverage production device according to (1) or (2) described above, in which a duration in which the air pressure inside the bottle is held at the air pressure lower than the atmospheric pressure in the depressurization holding step is 30 seconds or less, and a duration in which the air pressure inside the bottle is held at the air pressure higher than the atmospheric pressure in the pressurization holding step is 30 seconds or less.
(4) Provided is the beverage production device according to (1) or (2) described above, in which a duration in which the air pressure inside the bottle is held at the air pressure lower than the atmospheric pressure in the depressurization holding step is 30 seconds, and a duration in which the air pressure inside the bottle is held at the air pressure higher than the atmospheric pressure in the pressurization holding step is 30 seconds, and in which the control unit performs control of performing the pressurization-depressurization cycle three times.

### [Advantageous Effects of Invention]

According to the present invention, since a material to be extracted and a liquid are put in a bottle, and the pressurization-depressurization cycle consisting of the depressurizing step, the depressurization holding step, the pressurizing step, and the pressurization holding step is performed, a beverage having substantially the same quality as the conventional one can be produced in a significantly shorter time than the conventional production method.

### [Brief Description of Drawings]

[Fig. 1]
   Fig. 1 is a diagram illustrating a conventional production method disclosed in Fig. 5 of Patent Literature 1.
[Fig. 2]

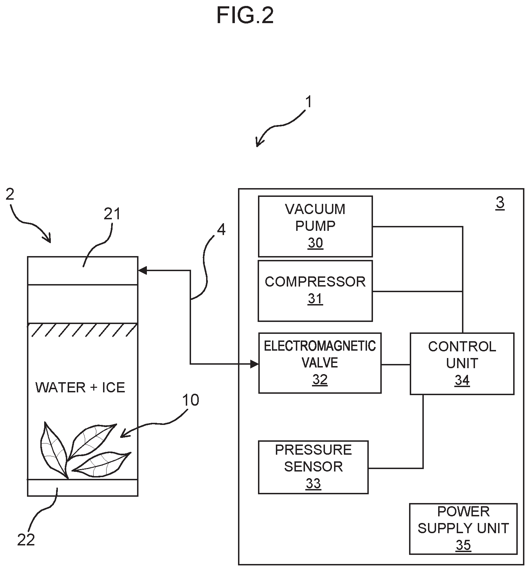

   Fig. 2 is a diagram illustrating a device configuration of a beverage production device in an embodiment of the present invention.
[Fig. 3]

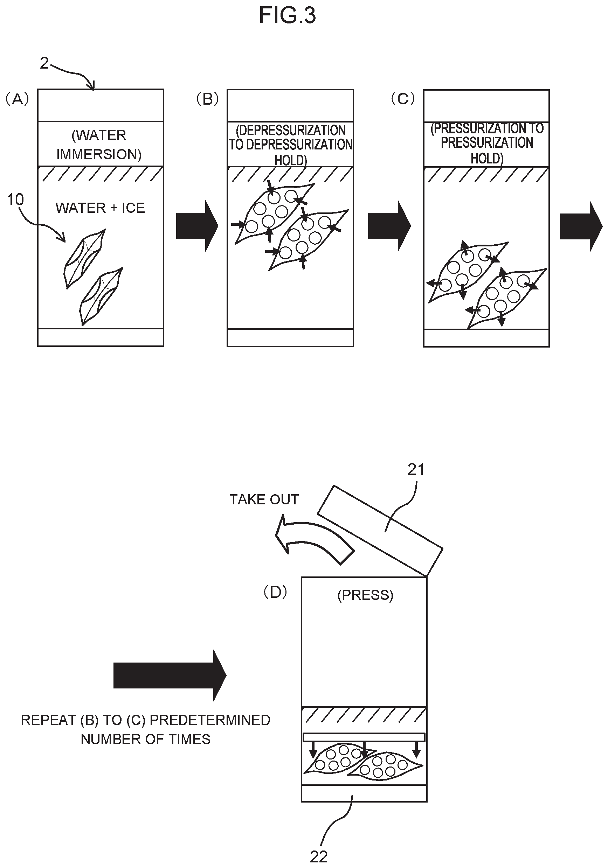

   Fig. 3 is a schematic diagram illustrating a pressurization-depressurization brewing method in the embodiment of the present invention.
[Fig. 4]

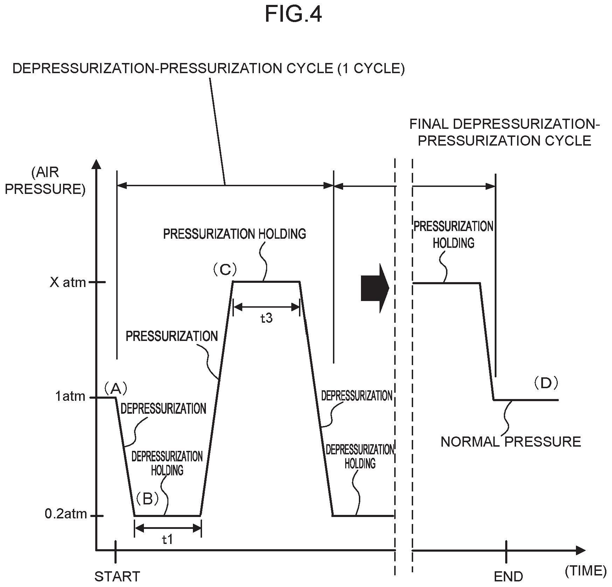

   Fig. 4 is an example of a time chart illustrating a depressurization brewing method in the embodiment of the present invention.
[Fig. 5]
   Fig. 5 is a table illustrating a result of a sensory evaluation test in the embodiment of the present invention.
[Fig. 6]

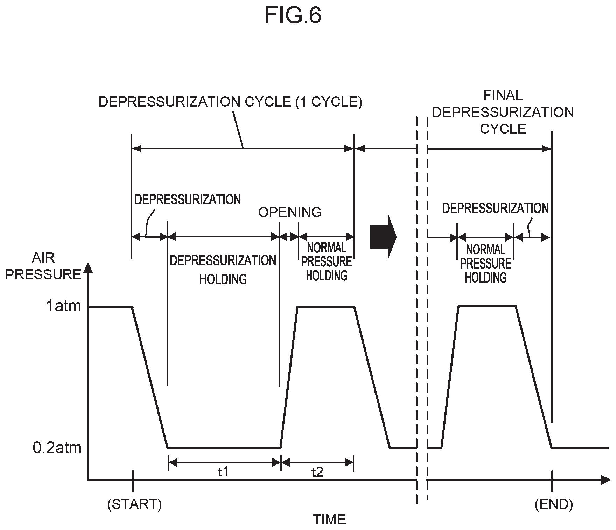

   Fig. 6 is a diagram illustrating a time chart of a conventional production method of No. 1 of Fig. 5.
[Fig. 7]

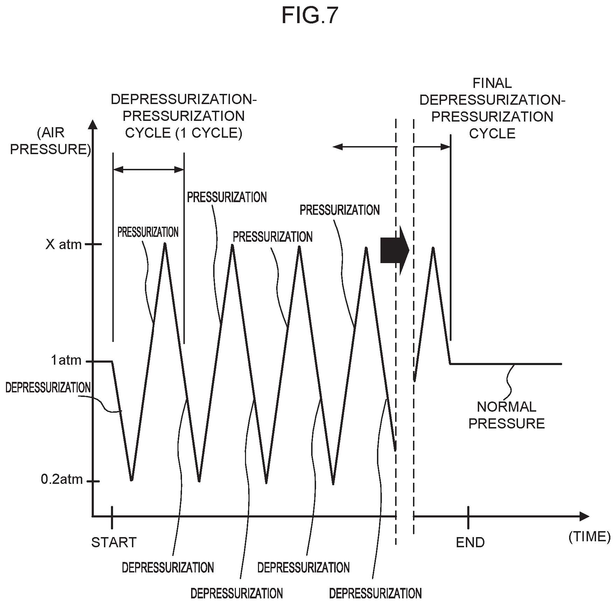

   Fig. 7 is a diagram illustrating a time chart of No. 7 of Fig. 5.
[Fig. 8]

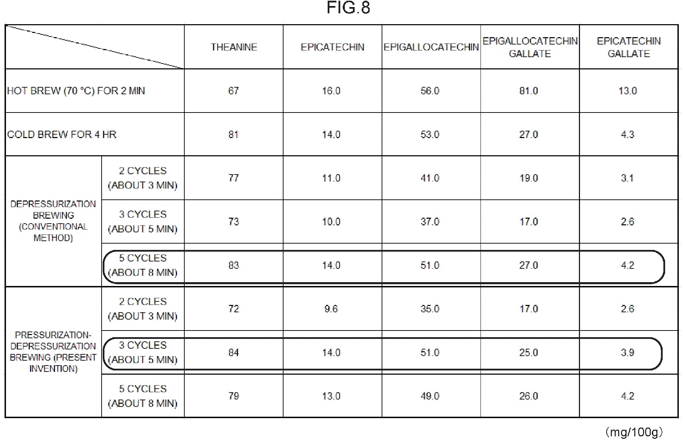

   Fig. 8 is a table for comparison between the extraction amount of each extracted component in the embodiment of the present invention and the extraction amount of each extracted component in the conventional production method.

### [Description of Embodiments]

One embodiment of a beverage production device of the present invention will be described below with reference to the drawings. Fig. 2 illustrates a general device configuration of a beverage production device 1 in the present embodiment. Further, mainly, a bottle 2 that can contain a beverage to be produced and a pressure adjustment machine 3 that can pressurize and depressurize inside of the bottle 2 are connected to each other via a pipe 4 formed of a tube or the like.

The pressure adjustment machine 3 includes at least a compressor 31 and a vacuum pump 30, an electromagnetic valve 32, a pressure sensor 33, a control unit 34, and a power supply unit 35. Further, pressurization and depressurization control inside the bottle 2 is made possible by a control program of the control unit 34 that can control the compressor 31 and the vacuum pump 30 and also the electromagnetic valve 32 based on a pressure detection result inside the bottle 2 from the pressure sensor 33. Note that the compressor 31 and the vacuum pump 30 described above are not necessarily limited to the use of separate components, and a vacuum pump that also serves as a compressor may be used.

The bottle 2 is a container that is not deformed or the like under an increased or reduced pressure, and the material of the container may be suitably selected from, for example, transparent resin, glass, ceramics, metal, or the like. In addition, the bottle 2 is configured to be sealable and has an openable lid 21 at the bottle top and an openable bottom lid 22 at the bottle bottom. The lid 21 is provided with a connecting part (not illustrated) that communicates with the inside of the bottle 2 and can attach and detach the pipe 4 thereto and therefrom.

The pressure adjustment machine 3 is provided with a display unit and an operation setting unit formed of an operating button or the like (not illustrated) and configured to perform a pressurization-depressurization cycle described later once or multiple times based on setting operation made on the operation setting unit.

### [Beverage production method]

Next, an example of a beverage production method according to the beverage production device 1 of the present embodiment will be described. First, the bottom lid 22 of the bottle 2 is closed, the lid 21 is opened, predetermined amounts of water, ice, and a material to be extracted 10 are put into the bottle 2, and the lid 21 is closed. Note that the material to be extracted 10 may be tea leaves, herbs, fruits, dried flowers, spices, or the like. Further, the pipe 4 extending from the electromagnetic valve 32 of the pressure adjustment machine 3 is connected to the connecting part of the lid 21. Subsequently, after the pressure adjustment machine 3 is powered on, the number of times of a pressurization-depressurization cycle described later (see Fig. 4 or the like) to be performed is set by the operation setting unit (not illustrated), and the pressurization-depressurization cycle is performed a predetermined number of times set by operation of pressing an operation start button (not illustrated).

After the pressurization-depressurization cycle is performed a predetermined number of times, the pipe 4 is detached from the connecting part of the lid 21. In accordance with such a series of operations, a beverage in which components of the material to be extracted 10 are extracted is produced in the bottle 2. Note that, when tea leaves are included as the material to be extracted 10, "catechins" that serve as a bitter component of a tea are likely to be extracted at a high temperature, and "theanine" that serves as an umami component is extracted in all the temperature ranges. In accordance with such properties, by putting a predetermined amount of ice into the bottle 2 as described above to reduce the water temperature, it is possible to efficiently extract "theanine" that serves as an umami component while suppressing extraction of "catechins" that serve as bitter components.

Next, the pressurization-depressurization cycle described above will be described in detail with reference to Fig. 3 and Fig. 4. In a phase before the pressurization-depressurization cycle is performed, predetermined amounts of water, ice, and the material to be extracted 10 have been put into the bottle 2, as illustrated in (A) of Fig. 3 and (A) of Fig. 4. Further, the air pressure inside the bottle 2 has been a normal pressure (1 atm). Execution of the pressurization-depressurization cycle is then started in response to start of an operation of the pressure adjustment machine 3. Note that, in general, water is heaviest at a temperature of 4 °C and is retained at the lower part in the bottle 2, and water at a temperature lower than 4 °C is lighter and is thus retained in the upper part. Thus, the water temperature in the bottle 2 is lower than or equal to 4 °C.

As illustrated in (B) of Fig. 3 and (B) of Fig. 4, the inside of the bottle 2 is gradually depressurized up to approximately 0.2 atm (depressurizing step). Accordingly, the material to be extracted 10 is expanded, and this makes it possible to effectively incorporate water into cells of the expanded material to be extracted 10. For sufficient incorporation of water into the cells, the depressurized state is held for 30 seconds as the depressurization holding time (t1) in the present embodiment (depressurization holding step).

After the depressurized state is held for a predetermined duration, the depressurized state is released, and the inside of the bottle 2 is pressurized in accordance with the control of the pressure adjustment machine 3, as illustrated in (C) of Fig. 3 and (C) of Fig. 4. The inside of the bottle 2 is gradually pressurized up to 1.2 atm or higher, more preferably approximately 1.8 to 2.0 atm (pressurizing step). Accordingly, the expanded material to be extracted 10 returns to the original state, and various components contained in the material to be extracted 10 are extracted together with water incorporated into the cells during the depressurization. For various components to be sufficiently extracted, the pressurized state is held for 30 seconds as the pressurization holding time (t3) in the present embodiment (pressurization holding step).

As described above, after the pressurization-depressurization cycle has been performed a predetermined number of times, the material to be extracted 10 in the bottle 2 is pressed, and the beverage is taken out of the bottle 2, as illustrated in (D) of Fig. 3 and (D) of Fig. 4.

Note that, after the beverage is taken out of the bottle 2, the material to be extracted 10 and a small amount of the liquid are left on the bottom of the bottle 2, and in particular, when the material to be extracted 10 contains tea leaves, the liquid left on the bottom of the bottle 2 contains a large amount of theanine that serves as an umami component. Therefore, by taking out the liquid contained in the tea leaves while pressing the left tea leaves, it is possible to finally take out a liquid with a strong umami flavor. The material to be extracted 10 left inside the bottle 2 is discarded with the bottom lid 22 being opened. Since the openable bottom lid 22 is provided at the bottom of the bottle 2 in the present embodiment, it is possible to easily discard the left material to be extracted 10.

### [Comparison to conventional production method]

Subsequently, evaluation through comparison between the beverage production method in accordance with the beverage production device 1 of the present embodiment and the conventional production method was made, and the evaluation result will be described.

Fig. 5 illustrates a test result of a sensory evaluation test, in which the sensory evaluation result in accordance with the conventional production method is listed as "No. 1", a plurality of production methods ("No. 2" to "No. 7") including the production method of the present embodiment are compared thereto, and the effectiveness thereof is verified.

Herein, with respect to "No. 1" corresponding to the conventional production method, "No. 3", and "No. 5", the depressurization cycle disclosed in Patent Literature 1 is performed and, as illustrated in the time chart of Fig. 6, a cycle of depressurization, depressurization holding, then opening to the atmosphere, and normal pressure holding is repeated. That is, unlike the present embodiment, neither the pressurizing step nor the pressurization holding step is performed.

As illustrated in the time chart of Fig. 7, with respect to "No. 7" of Fig. 5, depressurization and pressurization without holding the pressure are repeated for a predetermined duration under a particular reduced pressure and increased pressure.

As can be seen from the test result of the sensory evaluation test of Fig. 5, with respect to "No. 1" of the conventional production method used as a reference for sensory evaluation, 30 seconds of the depressurization holding time and 30 seconds of the open-to-atmosphere holding time were performed for 5 cycles, and the total time required for brewing was 8 minutes. On the other hand, with respect to "No. 4" of the present embodiment, 30 seconds of the depressurization holding time and 30 seconds of the pressurization holding time were performed for 3 cycles to realize substantially the same taste as that of "No. 1" of the conventional production method. Further, the total time required for the brewing was reduced from 8 minutes to 5 minutes. That is, by employing the pressurizing step and the pressurization holding step described above, it is possible to reduce the time required for brewing a beverage by as much as 3 minutes.

Subsequently, Fig. 8 illustrates a table in which teas produced by the conventional production method (depressurization brewing) and teas produced by the present embodiment (pressurization-depressurization brewing) are compared to each other in terms of the extraction amount of each extracted component. As listed in the table, the extraction amount of various extracted components resulted when the pressurization-depressurization brewing in the present embodiment is performed three cycles is substantially the same as the extraction amount of various brewed components resulted when the depressurization brewing, which is the conventional production method, is performed for five cycles.

To describe in more detail, by performing the pressurization-depressurization brewing, it is possible to reduce the number of cycles from conventional five cycles to three cycles, and it is thus possible to significantly reduce the time required for brewing a beverage. That is, even when the number of cycles is reduced and thereby the brewing time is reduced, it is possible to extract substantially the same amount of "theanine", which serves as an umami component, as the conventional case of five cycles of the depressurization brewing.

Moreover, because the number of cycles is reduced by the pressurization-depressurization brewing and thereby the brewing time is reduced, the extraction amounts of catechins (epigallocatechin gallate, epicatechin gallate), which serve as bitter components, can be suppressed.

The extraction amount of each extracted component listed in Fig. 8 is obtained when the pressure during the pressurization is 1.2 atm. When the pressure during the pressurization is further increased up to approximately 1.8 to 2.0 atm, the number of cycles of the pressurization-depressurization cycle can be 3 or less, and thereby the brewing time can be further reduced. As another method, it is possible to reduce the depressurization holding time and/or the pressurization holding time to 30 seconds or less to further reduce the brewing time. By increasing the pressure during the pressurization as such, it is also possible to reduce a beverage brewing time to approximately 1.5 minutes.

From the evaluation result and the like described above, according to the beverage production device 1 of the present embodiment, it is possible to produce a beverage in a remarkably short time while suppressing bitterness compared to the conventional production method.

### [Other embodiments]

Although one embodiment of the beverage production device of the present invention has been described above, the present invention is not necessarily limited to the configuration as described above, and various modifications as below are possible.

For example, although the depressurization holding time or the pressurization holding time being 30 seconds or less has been illustrated in the embodiment described above, the depressurization holding time or the pressurization holding time can be set to any length of time, and a suitable length of time can be set in accordance with the state, quality, or type of the material to be extracted 10.

Specifically, a suitable depressurization holding time or pressurization holding time may be examined for each state, quality, or type of the material to be extracted 10, and the embodiment can be configured such that a depressurization holding time or a pressurization holding time can be set via operation made on the operation setting unit. Further, as another method, the control unit 34 may be provided with a unit for selecting a material to be extracted (not illustrated), the unit for selecting a material to be extracted may be operated to input the type or the like of the material to be extracted 10, and thereby the embodiment may be configured such that the depressurization holding time or the pressurization holding time suitable for the type of the material to be extracted 10 is set and controlled.

Although the pressure for the depressurized state is approximately 0.2 atm, and the pressure for the pressurized state is 1.2 atm or higher, more preferably approximately 1.8 to 2.0 atm in the embodiment described above, the pressure suitable for brewing differs in accordance with the state, quality, or type of the material to be extracted 10. It is therefore more preferable to perform a test run for each type of the material to be extracted 10 in advance and find the optimal pressure in accordance with the type or the like of the material to be extracted 10 in advance.

Although the embodiment described above is configured to use the operation setting unit to set the number of times of the pressurization-depressurization cycle to be performed, the embodiment is not necessarily limited to such a form. For example, the embodiment may be configured such that the state, quality, or type of the material to be extracted 10 can be operated and set, and the number of times of the pressurization-depressurization cycle to be performed that is suitable for the type of the material to be extracted 10 or the like may be set by a control program. Such a configuration enables anyone to easily create a tasty beverage even with any material to be extracted 10.

When the material to be extracted 10 includes tea leaves, the content of theanine, the optimal water temperature at which theanine is efficiently extracted, or the like differ in accordance with the type of the tea leaves. It is therefore preferable to examine optimal brewing conditions for respective types of tea leaves and, based on the result of the examination, set the number of times of the pressurization-depressurization cycle to be performed, a water temperature during brewing, a depressurization holding time or a pressurization holding time in each cycle, or the like. For example, by storing control information for the beverage production device in accordance with types of tea leaves, respectively, in the storage unit (not illustrated) of the control unit 34 and selecting and setting a type of tea leaves for a tea leaves selection unit of the control unit 34, it is possible to create a beverage under the optimal brewing conditions for the selected tea leaves. Such a configuration makes it possible to brew the inherent umami flavor of the tea leaves at the maximum.

Although a beverage is produced with water, ice, and the material to be extracted 10 being contained the bottle 2 in the embodiment described above, the embodiment is not necessarily limited thereto. For example, it is naturally possible to produce a beverage without adding ice. Furthermore, it is also possible to use a liquid other than water, for example, a liquid such as alcohol or oil (olive oil or the like), carbonated water, or the like and extract extracted components of the material to be extracted 10 into the liquid. This makes it possible to produce various beverages.

Although the brewing time is about 3 minutes for 2 cycles of the pressurization-depressurization brewing, about 5 minutes for 3 cycles, and about 8 minutes for 5 cycles in the embodiment described above, the filling ratio of a liquid relative to the bottle 2 may be increased, the amount of air in the bottle 2 may be reduced, and thereby the time taken for brewing can be further reduced. For example, the brewing time can be reduced to about 2 minutes for 2 cycles of the pressurization-depressurization brewing, to about 3.5 minutes for 3 cycles, and to about 6 minutes for 5 cycles.

Although one embodiment of the beverage production device of the present invention has been described above with reference to the drawings and the like, the specific configuration is not limited to such embodiments. The scope of the present invention is defined by the claims rather than the illustration of the embodiment described above and further includes all the modifications within the meaning and the scope of equivalents to the claims. Further, the specific material, dimension, shape, or the like described in the above embodiment can be changed within the scope that achieves the object of the present invention.

### [List of Reference Symbols]

- 1: beverage production device
- 2: bottle
- 3: pressure adjustment machine
- 4: pipe
- 10: material to be extracted
- 21: lid
- 22: bottom lid
- 30: vacuum pump
- 31: compressor
- 32: electromagnetic valve
- 33: pressure sensor
- 34: control unit
- 35: power supply unit

## Claims

1. A beverage production device comprising:
a bottle configured to contain at least a material to be extracted and a liquid; and
a pressure adjustment machine connected to the bottle via a pipe and configured to increase and reduce an air pressure inside the bottle,
wherein the bottle comprises a lid configured to be connected to the pipe and seal the bottle,
wherein the pressure adjustment machine comprises a compressor, a vacuum pump, an electromagnetic valve, a pressure sensor, and a control unit configured to control the compressor, the vacuum pump, and the electromagnetic valve based on a detection result from the pressure sensor, and
wherein the control unit performs a pressurization-depressurization cycle comprising a depressurizing step of reducing the air pressure inside the bottle to an air pressure lower than the atmospheric pressure, a depressurization holding step of holding the air pressure inside the bottle at the air pressure lower than the atmospheric pressure for a predetermined duration after the depressurizing step, a pressurizing step of increasing the air pressure inside the bottle to an air pressure higher than the atmospheric pressure after the depressurization holding step, and a pressurization holding step of holding the air pressure inside the bottle at the air pressure higher than the atmospheric pressure for a predetermined duration after the pressurizing step.

2. The beverage production device according to claim 1, wherein the material to be extracted includes at least tea leaves, the liquid is water, and the pressurization-depressurization cycle is performed with ice being contained in the bottle.

3. The beverage production device according to claim 1 or 2, wherein a duration in which the air pressure inside the bottle is held at the air pressure lower than the atmospheric pressure in the depressurization holding step is 30 seconds or less, and a duration in which the air pressure inside the bottle is held at the air pressure higher than the atmospheric pressure in the pressurization holding step is 30 seconds or less.

4. The beverage production device according to claim 1 or 2,
wherein a duration in which the air pressure inside the bottle is held at the air pressure lower than the atmospheric pressure in the depressurization holding step is 30 seconds, and a duration in which the air pressure inside the bottle is held at the air pressure higher than the atmospheric pressure in the pressurization holding step is 30 seconds, and
wherein the control unit performs control of performing the pressurization-depressurization cycle three times.
